# EUROPÄISCHE PATENTSCHRIFT

(11) **EP 0 462 054 B1**
(45) Veröffentlichungstag und Bekanntmachung des Hinweises auf die Patenterteilung: **03.01.1996**
(21) Anmeldenummer: 91810402.7
(22) Anmeldetag: 28.05.1991
(51) Int. Cl.: B27B 5/06

(54) **Plattensäge**
Panel saw
Scie à panneaux

(30) Priorität: 11.06.1990 CH 1960/90
(43) Veröffentlichungstag der Anmeldung: 18.12.1991
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- BE-A- 549 960
- CH-A- 386 095
- DE-B- 2 919 451
- FR-A- 2 384 595
- FR-A- 2 385 503
- US-A- 3 008 498

## Beschreibung

Die vorliegende Erfindung betrifft eine Plattensäge gemäss dem Oberbegriff des unabhängigen Patentanspruchs.

Die Hauptfunktionen der bekannten Plattensägen dieser Art sind bekanntlich
- die Horizontalverschiebung des Sägebalkens längs des Gestells,
- die Vertikalverschiebung des Sägeaggregats längs des Sägebalkens und
- die Ein- und Austauchbewegung des Sägeaggregats bei Durchführung der Schnitte,
wobei aus Sicherheitsgründen diese Funktionen so aufeinander abgestimmt sein sollten, dass jeweils nur eine gewünschte Funktionsgruppe durchführbar ist und das unerwünschte Dazwischentreten von Störfunktionen absolut ausgeschlossen wird.

Eine derartige Plattensäge wird beispielsweise in DE-29 19 451 beschrieben. Die obengenannten Funktionen werden hier durch eine Rastvorrichtung zur horizontalen Verrastung, eine Klemmvorrichtung zur vertikalen Blokkierung und ein Sperrorgan für die Eintauchbewegung der Säge wahrgenommen. Die Abstimmung dieser Vorrichtungen auf den jeweiligen Arbeitsschritt erfolgt über eine Schaltanordnung, die mittels eines Schalthebels am Sägeschlitten bedient wird. Diese Bedienung über einen Schalthebel weist den Nachteil auf, dass sie jeweils nur auf Höhe des Schalthebels möglich ist, was insbesondere beim Sägen in sehr hohen oder tiefen Lagen erstens unpraktisch ist und zweitens die Bedienungsperson dazu verleiten kann, hinsichtlich der Arbeitssicherheit gefährliche Positionen einzunehmen. Zudem ergibt sich mit der beschriebenen Schaltanordnung eine vergleichsweise komplizierte Bauweise.

Demgegenüber ist es die Aufgabe der vorliegenden Erfindung, eine Plattensäge der eingangs definierten Art vorzuschlagen, welche sowohl im Horizontalschnitt als auch im Vertikalschnitt grösstmögliche Sicherheit bei unkomplizierter Bauweise und verbessertem Bedienungskomfort gestattet.

Die Lösung dieser Aufgabe ist im kennzeichnenden Teil des unabhängigen Patentanspruchs definiert. Bevorzugte Ausführungsformen der Erfindung ergeben sich aus den abhängigen Ansprüchen.

Nachstehend wird anhand der beiliegenden Zeichnung ein Ausführungsbeispiel der erfindungsgemässen Plattensäge beschrieben.
Fig. 1 ist eine vereinfachte Frontalansicht des Mittelabschnitts einer solchen Ausführungsform,
Fig. 2 zeigt in Perspektivdarstellung den oberen Endabschnitt des Sägebalkens einschliesslich der an diesem angeordneten Steuerorgane,
Fig. 3 veranschaulicht anhand einer Schnittdarstellung die Anordnung weiterer Steuerorgane am Sägeaggregat,
Fig. 4 ist eine Frontalansicht entsprechend der in Figur 3 gewählten Darstellung,
Fig. 5 zeigt die in Figur 2 dargestellte Anordnung in einer weiteren Betriebslage,
Fig. 6 zeigt die Anordnung gemäss Figur 3 in einer weiteren Steuerposition der Schwenkstange,
Fig. 7 ist die schematisch vereinfachte Ansicht einer Vorrichtung zur Feinverstellung der Höhenposition des Sägeaggregats,
Fig. 8 ist eine vereinfachte Perspektivdarstellung eines Details am Sägebalken und die
Fig. 9 und 10 zeigen eine Variante der mechanischen Steuerung in zwei Endlagen.

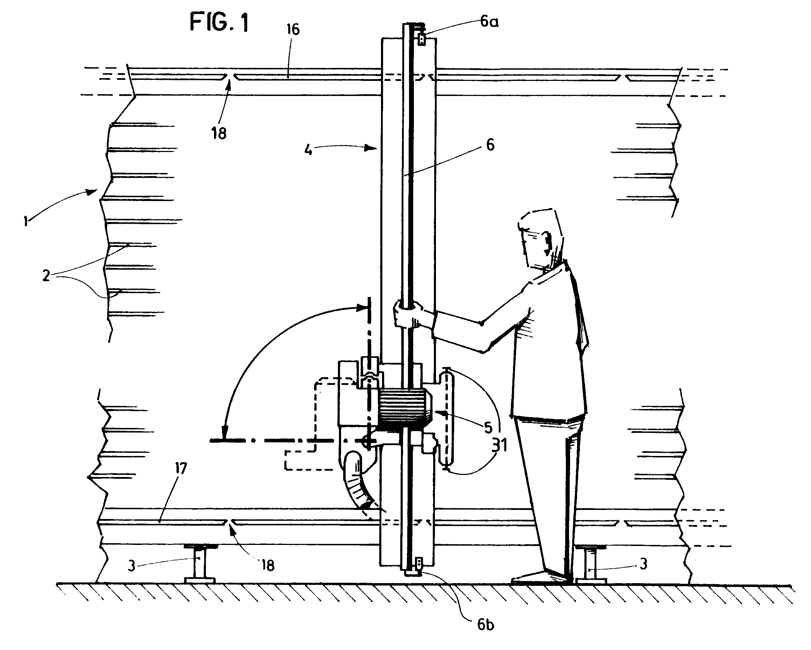

Die in Figur 1 schematisch und unter Verzicht auf unwesentliche Einzelheiten dargestellte Plattensäge weist ein Gestell 1 auf, das in bekannter Weise aus einer Vielzahl horizontaler Leisten 2 besteht und sich über Füsse 3 auf den Boden abstützt. An der Bedienungsseite des Gestells 1 ist ein Sägebalken 4 in bekannter Weise so gelagert, dass er sich über die Gesamtlänge des Gestells von Hand verschieben lässt. Am Sägebalken 4 ist ein Sägeaggregat 5 vertikal verschiebbar angeordnet.

An der Frontseite des Sägebalkens 4 befindet sich eine Schwenkstange 6, die an den Stellen 6a und 6b um eine zu ihrer eigenen Längsachse parallele Achse so verschwenkt werden kann, dass sie je nach Schwenkwinkel eine von drei verschiedenen Positionen einnimmt und damit die Hauptfunktionen des Systems entsprechend zu steuern gestattet.

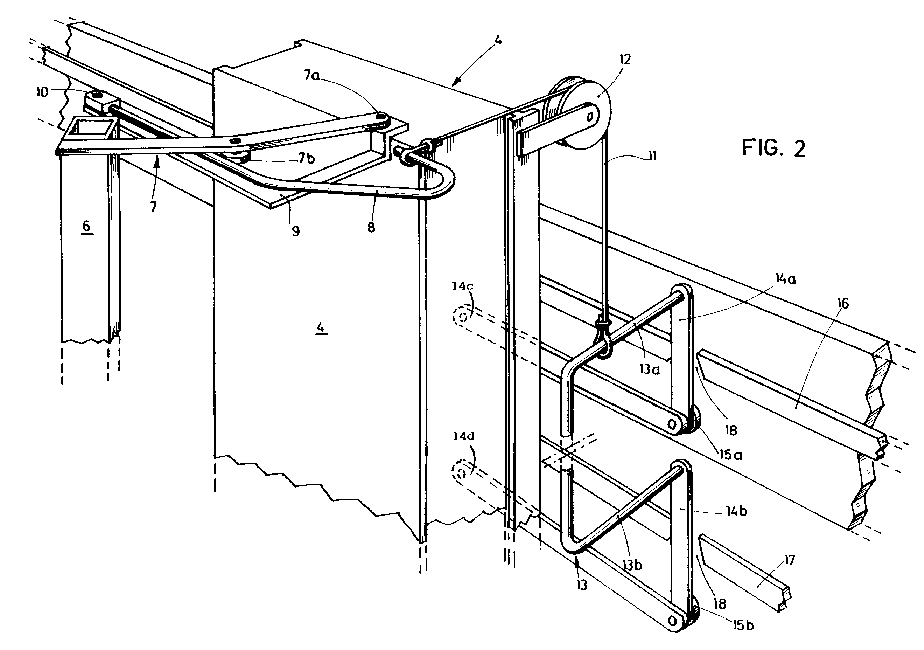

Gemäss Figur 2 ist am oberen Ende der Schwenkstange 6 ein leicht abgekröpfter Winkelhebel 7 befestigt, welcher an der Stelle 7a am Sägebalken 4 drehbar gelagert ist und in seiner Kröpfung eine lose drehbare Rolle 7b trägt. Letztere liegt an der Innenseite einer Uebertragungsstange 8 an, die an einer Konsole 9 bei 10 drehbar gelagert ist. Am freien Ende der Uebertragungsstange 8 ist ein Kabel 11 befestigt, das über eine am Sägebalken 4 angeordnete Rolle 12 geführt ist und die eigentliche Arretierungsvorrichtung trägt. Letztere weist eine Steuerstange 13 auf, die sich über die Gesamthöhe des Gestells erstreckt und an ihren Enden um 90° umgebogene Arme 13a, 13b besitzt. An den Armen 13a, 13b sind Laschen 14a, 14b befestigt, die Rollen 15a, 15b tragen, und mit dem Sägebalken mittels Laschen 14c, 14d verbunden sind.

Wie ferner die Figur 1 und 2 zeigen, sind am oberen und unteren Randbereich des Gestells Arretierungsleisten 16 und 17 befestigt, die sich über die gesamte Gestelllänge erstrecken und an vorbestimmten Stellen mit nach unten sich erweiternden Kerben 18 versehen sind. Die Anordnung dieser Kerben ist so gewählt, dass jeweils zwei zusammengehörige Kerben 18 direkt übereinander liegen, d.h. vom Sägebalken 4 den gleichen waagrechten Abstand aufweisen.

In der in Figur 2 gezeigten Stellung der Schwenkstange 6 ist die Steuerstange 13 durch das Zusammenwirken der Rolle 7b mit der Uebertragungsstange 8 abgesenkt, so dass die Rollen 15a, 15b ausser Eingriff mit den Kerben 18 der Arretierungsleisten 16, 17 sind. Der Sägebalken 4 ist daher längs des Gestells 1 für den Horizontalschnitt frei verschiebbar.

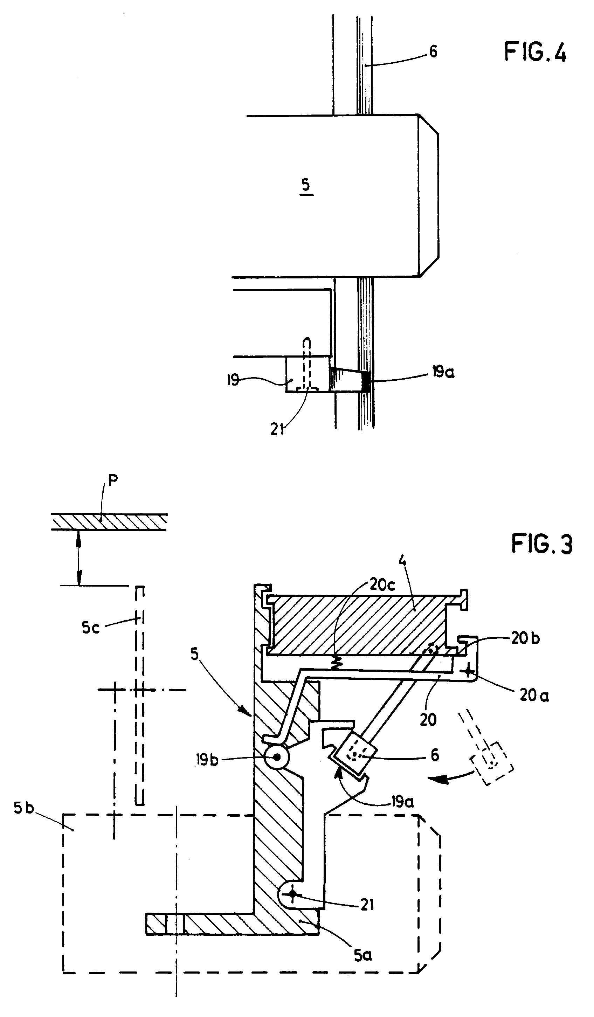

Mit der in Figur 2 gezeigten extremen Linksposition der Schwenkstange 6 ist eine weitere Funktion verbunden, die sich aus Figur 3 ergibt.

Am Sägeaggregat 5, das im wesentlichen einen Rahmen 5a sowie den gestrichelt angedeuteten Motor 5b mit dem Sägeblatt 5c umfasst, ist ein Hebelsystem angebracht, das zwei zusammenwirkende Hebel 19 und 20 aufweist. Der am Rahmen 5a um die Stelle 21 schwenkbar gelagerte erste Hebel 19 weist einerseits eine Einkerbung 19a auf, in die die Schwenkstange 6 in deren extremer Linksposition einrastet. Andererseits ist am Hebel 19 eine Rolle 19b angeordnet, die am Endabschnitt des zweiten durch eine Feder 20c vorgespannten Hebels 20 anliegt und den letzteren, der um die Stelle 20a drehbar ist, mit seiner Klemmschulter 20b gegen den Sägebalken 4 presst. Damit ist das Sägeaggregat 5 sicher gegen jegliche Vertikalbewegung blockiert.

In Figur 3 wird das Hebelsystem durch die Schwenkstange 6 in seiner Position für die Durchführung des Horizontalschnitts gehalten, wogegen das Sägeaggregat in seiner Vertikalschnittlage gezeichnet ist. Sollte nun aus Versehen versucht werden, das Sägeaggregat aus der gezeichneten Lage einzutauchen, so stösst das Motorgehäuse 5b gegen die Schwenkstange, bevor das Sägeblatt die zu zerschneidende Holzplatte P berührt (s. Fig. 4). Damit ist eine weitere Sicherheitsfunktion erreicht, die mit der blossen Verlagerung der Schwenkstange 6 in deren eine Endlage verbunden ist.

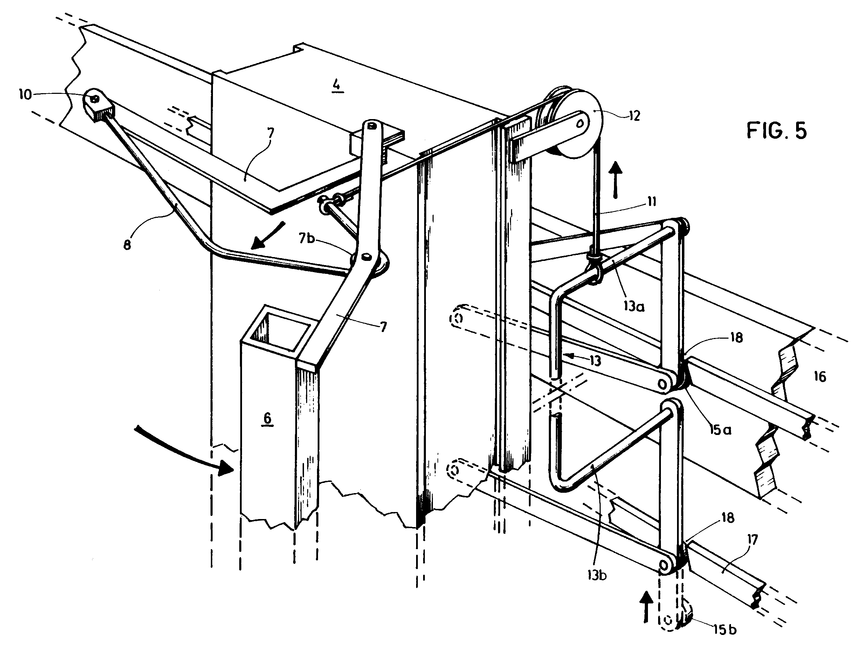

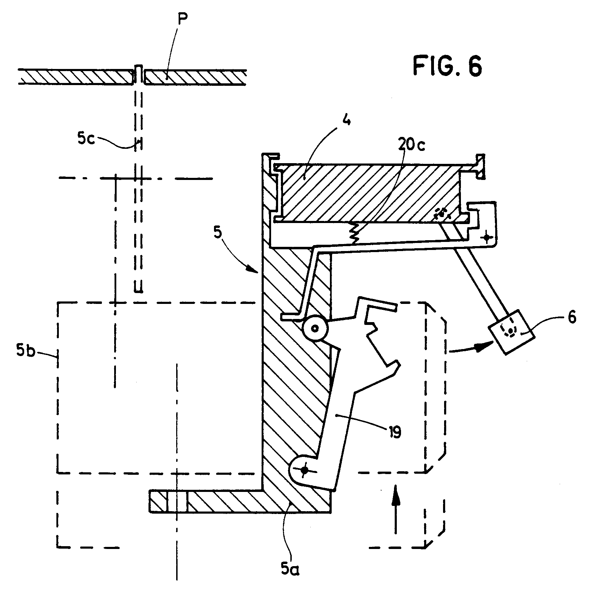

Die Figuren 5 und 6 zeigen das beschriebene System in der für Durchführung des Vertikalschnitts erforderlichen Stellung.

Durch Verlagerung der Schwenkstange 6 in deren extreme Rechtsposition wurden die Rollen 15a, 15b in Eingriff mit den Kerben 18 gebracht, so dass eine Horizontalverschiebung des Sägebalkens 4 nicht mehr möglich ist. Gleichzeitig wurde aber auch, wie Figur 6 zeigt, die Verklemmung des Sägeaggregats 5 am Sägebalken 4 gelöst; das Sägeaggregat 5 lässt sich somit längs des Sägebalkens 4 frei verschieben, wie dies für den Vertikalschnitt erforderlich ist.

Wie sich ferner aus Figur 6 ergibt, befindet sich die Schwenkstange 6 nun so weit rechts, dass sie die Eintauchbewegung des Sägeaggregats 5 nicht mehr stört.

In einer Mittelstellung der Schwenkstange 6 befinden sich die Rollen 15a, 15b ausser Eingriff und die Klemmverbindung des Sägeaggregats 5 am Sägebalken ist ebenfalls gelöst, da beide Sicherungsfunktionen nur mit den extremen Linkslage und Rechtlage der Schwenkstange 6 kombiniert sind. Gleichzeitig wird in dieser Mittelstellung der Schwenkstange 6, in welcher sowohl der Sägebalken 4 als auch das Sägeaggregat 5 beliebig verfahrbar sind, durch eine am Sägebalken 4 angeordnete Vorrichtung das Eintauchen des Sägeblattes unterbunden. Die Position Mittelstellung der Schwenkstange entsteht automatisch durch die Rückzugsfeder an der Stange 13 und durch entsprechende Form der Stange 8 bzw. des Hebels 33.

Die beschriebene Plattensäge erzielt die gleichzeitige Realisierung der wichtigsten Sicherungsfunktionen auf unkomplizierte Weise und gestattet es ferner, sämtliche Bedienungsoperationen von einer einzigen Bedienungsposition aus, d.h. durch blosse Betätigung der Schwenkstange, einzuleiten.

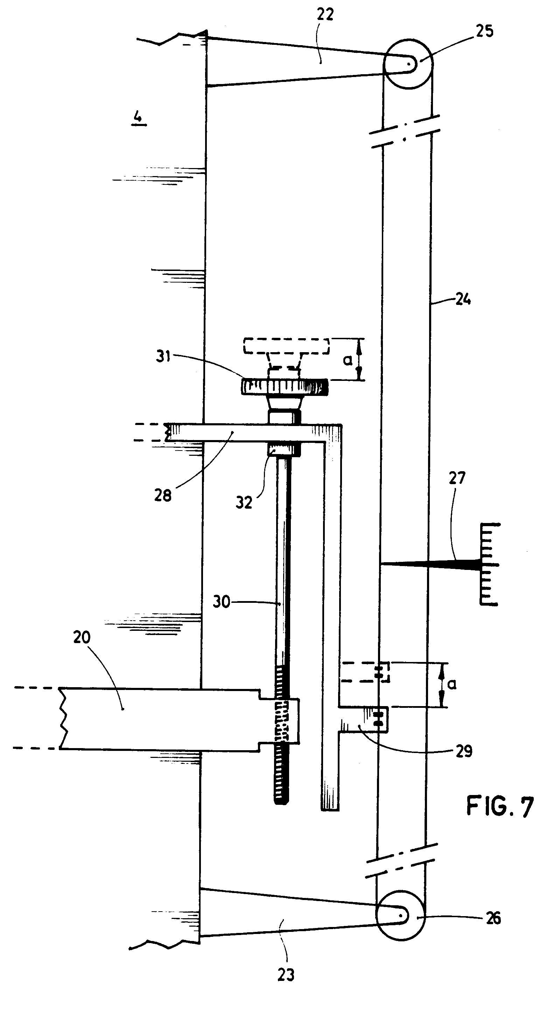

Wie sich anhand der Beschreibung von Fig. 3 und 6 ergab, fixiert der Hebel 20 das Sägeaggregat 5 am Sägebalken 4, indem er durch den Hebel 19 gegen den Sägebalken gepresst wird. Mit dieser Verriegelungsanordnung ist nun eine Moglichkeit der Feineinstellung des Horizontalschnittniveaus verbunden; ein Ausführungsbeispiel einer solchen Feineinstellung zeigt Fig. 7.

Am Sägebalken 4 ist mittels zweier Konsolen 22 und 23 ein endloses Messband 24 befestigt, das über zwei lose Rollen 25 und 26 geführt ist. Ein am Sägebalken 4 angebrachter Zeiger 27 ragt in den Messbandbereich und gestattet es, die jeweilige Höhe des Sägeaggregates, und damit auch des Sägeblattes, abzulesen. Am Sägeaggregat 5 ist ferner eine L-förmige Konsole 28 befestigt, an deren vertikalem Schenkel das Messband 24 über einen Arm 29 festgemacht ist.

Das Messband 24 wird somit einerseits beim Verschieben des Sägeaggregats 5 längs des Sägebalkens 4 mitgenommen und ist andererseits aber auch so mit der Konsole 28 verbunden, dass jegliche Relativbewegung zwischen der Konsole 28 und dem Sägeaggregat 5 eine (Fein-) Verstellung des Messbandes 24 mit sich bringt.

Am waagrechten Schenkel der Konsole 28 ist eine Spindel 30 gelagert, deren an das Handrad 31 angrenzender oberer Abschnitt in einer mit der Konsole 28 festverbundenen Muffe 32 drehbar gelagert, aber mit der Muffe 32 - und daher auch mit der Konsole 28 - so gekoppelt ist, dass jegliche Axialverschiebung der Spindel 30 auch eine entsprechende Vertikalbewegung des gesamten Sägeaggregates 5 bewirkt.

Der untere Abschnitt der Spindel 30 ragt in das mit Innengewinde versehene freie Ende des Hebels 20 (vgl. auch Fig. 3 und 6), der wie bereits beschrieben in der Horizontalschnittposition am Sägebalken 4 verklemmt ist. Damit lässt sich das Sägeaggregat 5 bezüglich des Sägebalkens 4 verschieben, womit (Mass a in Fig. 7) eine äusserst feine Verstellung der jeweiligen Sägeblatthöhe möglich ist.

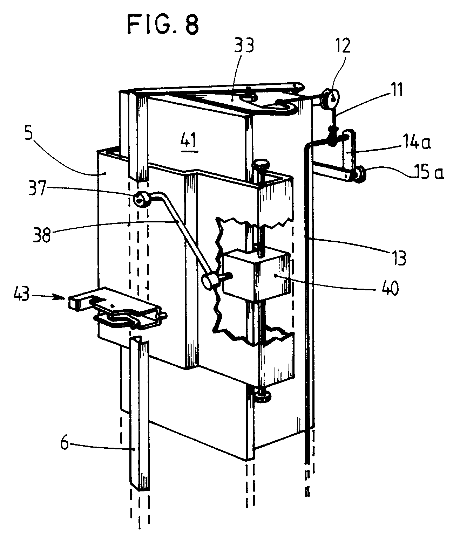

Die bevorzugte Ausführungsform der Erfindung zeigen die Fig. 8 bis 10.

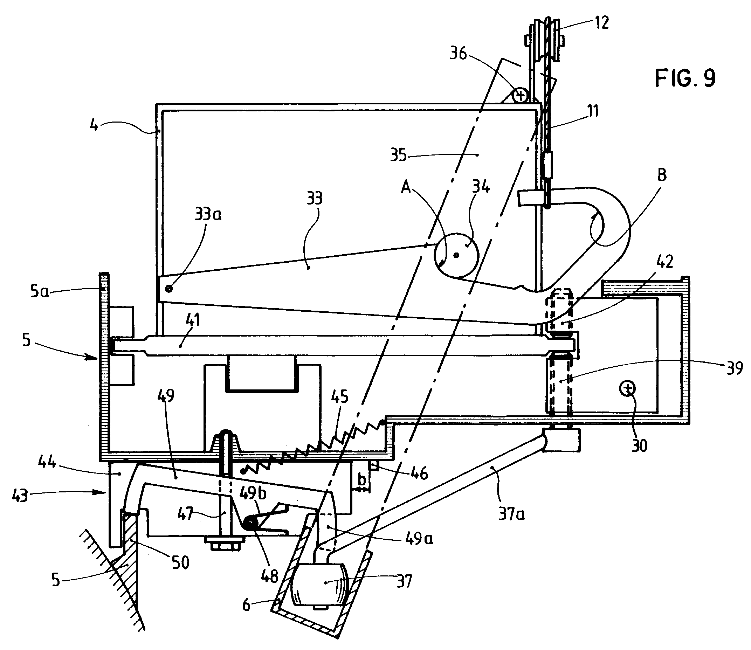

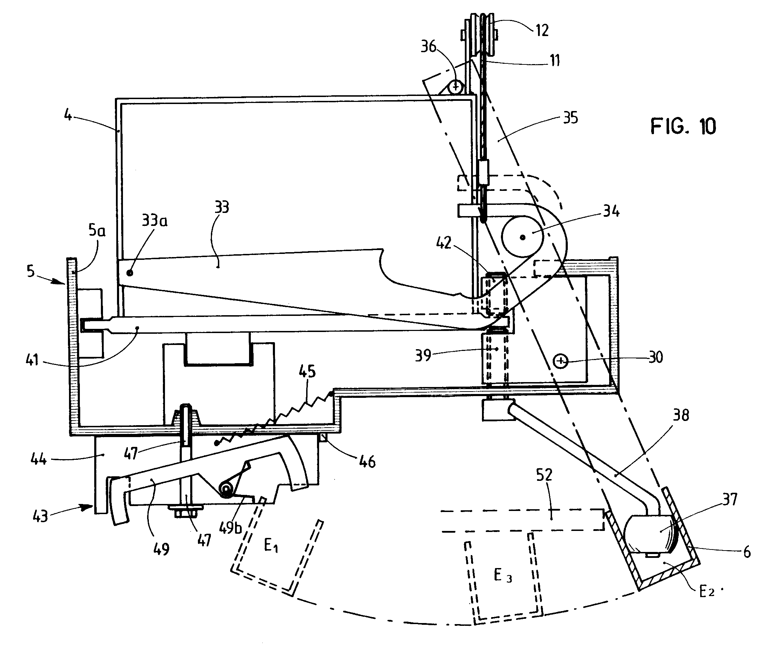

Gemäss Fig. 1 ist die auch hier mit 6 bezeichnete Schwenkstange auch wieder mit der oberen Arretierungslasche 14a und der unteren, in Fig. 8 nicht sichtbaren Lasche 14b über den bereits beschriebenen Seilzug 11 verbunden, wobei das Uebertragungsgestänge zwischen Schwenkstange 6 und Seilzug 11 anhand der Fig. 9 und 10 noch zu beschreiben sein wird. In Fig. 8 ist jedenfalls bereits ersichtlich, dass auch hier beim Verlagern der Schwenkstange 6 von links nach rechts die in Fig. 2 mit 15a und 15b bezeichneten Rollen in Eingriff mit den Kerben 18 gelangen und damit den Sägebalken 4 gegen jegliche Horizontalverschiebung blockieren.

Wie die Fig. 9 und 10 zeigen, weist das zwischen Schwenkstange 6 und Seilzug 11 eingeschaltete Uebertragungsgestänge anstelle der in Fig. 2 dargestellten Uebertragungsstange 8 einen Steuerbügel 33 auf, welcher an der Stelle 33a am Balken schwenkbar gelagert ist und eine Ausnehmung aufweist, die zwei Aufnahmeradien A und B für ein Kugellager 34 besitzt. Das Kugellager 34 ist an einem Hebel 35 gelagert, der seinerseits mit der Schwenkstange verbunden und um eine Achse 36 schwenkbar ist. Bei Verlagerung der Schwenkstange 6 verlagert sich demnach auch das Kugellager 34 von A nach B und sichert die Schwenkstange 6 somit in ihrer für den Vertikalschnitt erforderlichen Stellung. Die Sicherung der Schwenkstange in der Horizontalschnittstellung wird anschliessend noch beschrieben.

Die beiden Endlagen der Schwenkstange 6 sind in den Fig. 9 und 10 ersichtlich, wobei sich Fig. 9 auf die Horizontalschnittlage und Fig. 10 auf die Vertikalschnittlage des Sägeaggregates bezieht.

Mit der Verlagerung der Schwenkstange 6 sind noch weitere Funktionen verbunden, die nun anhand der Fig. 8 bis 10 beschrieben werden.

Innerhalb der Schwenkstange 6 ist der Kopf 37 einer Klemmkurbel 38 so gelagert, dass die mit einer Schraube 39 verbundene Kurbel 38 bei Verlagerung der Schwenkstange 6 um die Achse der Schraube 39 verschwenkt wird und damit die Schraube 39 betätigt. Die mit Linksgewinde versehene Schraube 39, die über ein Klemmstück 40 am Sägeaggregat ortsfest angeordnet ist, wird bei Betätigung gegen eine am Sägebalken 4 angeordnete Klemmplatte 41 bewegt, so dass diese zwischen der Schraube 39 und einem Gegenhalter 42 eingeklemmt wird; dadurch ist das Sägeaggregat gegen jegliche Vertikalverschiebung längs des Sägebalkens 4 blockiert.

Diese als Variante zur Vorrichtung 20 gemäss Fig. 3 einsetzbare Lösung weist-den Vorteil einer weit grösseren Klemmkraft und daher sicheren Blockierung des Sägeaggregats am Sägebalken auf.

Am Sägeaggregat 5 ist ferner eine in ihrer Gesamtheit mit 43 bezeichnete Eintauchsperre angeordnet, die einen am Rahmen 5a des Sägeaggregats 5 um das Mass b (Fig. 9) verschiebbar gelagerten Schlitten 44 aufweist, der unter dem Einfluss einer in Fig. 9 mit 45 bezeichneten Rückholfeder steht. In der linken Endlage der Schwenkstange 6 nach Fig. 9 wird der Schlitten 44 durch die an demselben anliegende Schwenkstange 6 entgegen der Rückstellkraft der Feder 45 in der gezeichneten Lage gehalten. Die rechte Endlage des Schlittens 44 ist durch einen Anschlagstift 46 begrenzt. Die Befestigung des Schlittens 44 am Sägeaggregat 5 erfolgt über eine Schraube 47, deren dem Schraubenkopf benachbarter Schaftabschnitt durch einen Schlitz des Schlittens 44 hindurchragt.

Eine am Sägeaggregat 5 um eine Achse 48 schwenkbar gelagerte Wippe 49 wird in der Horizontalschnittlage nach Fig. 9 durch einen am Sägeaggregat angeordneten Anschlag 50 in einer Stellung gehalten, in welcher der eine Arm 49a derselben in die Schwenkstange 6 U-förmigen Querschnitts hineinragt und die Schwenkstange 6 somit gegen jegliche Verlagerung blockiert, solange das Sägeaggregat 5 die Horizontalschnitt-Eintauchstellung einnimmt.

Beim Uebergang in die Vertikalschnittposition wird die Schwenkstange 6 in die in Fig. 10 dargestellte Lage verschwenkt, wobei
1) die Sägebalkenbewegung über den Seilzug 11 blockiert wird,
2) die Verklemmung des Sägeaggregates an der Klemmplatte gelöst wird und
3) der Schlitten 44 durch die Feder 45 in seine rechte Endlage gegen den Anschlagstift 46 gezogen wird und damit das Eintauchen der Säge in der Vertikalschnittposition des Sägeaggregats 5 gestattet, da nunmehr der am Schlitten 44 seitlich hervorragende Ansatz 51 nicht mehr im Wege des Ansatzes 50 (Fig. 9) liegt.

Durch die Eintauchbewegung des Sägeaggregates 5 zwecks Erzielung des Vertikalschnitts gerät eine Blockierkante 52 des Sägeaggregats zur Anlage an der Schwenkstange 6, so dass dieselbe nun auch in dieser Lage während der Ausführung des Vertikalschnitts nicht verlagert werden kann.

Befindet sich die Schwenkstange 6 in einer Zwischenstellung E₃ zwischen den beiden in Fig. 10 mit E₁ und E₂ bezeichneten Endlagen, so ist das Sägeaggregat 5 längs des Sägebalkens 4 frei beweglich und auch der Sägebalken 4 lässt sich horizontal verschieben, da die Rollen 15a/15b (Fig. 5) ausser Eingriff mit den Kerben 18 sind. Das Eintauchen des Sägeaggregats ist aus einer solchen Zwischenlage heraus nicht möglich, da die Eintauchbewegung nur aus einer der beiden Endlagen E₁/E₂ der Schwenkstange 6 bewerkstelligt werden kann, in jeglicher Zwischenlage jedoch die Schwenkstange 6 im Eintauchweg des Sägeaggregats 5 liegt.

## Patentansprüche

1. Plattensäge mit einer Auflagefläche für ein praktisch aufrecht stehendes plattenförmiges Werkstück (P), mit einem in Horizontalrichtung verfahrbaren Sägebalken, dessen Längsachse nahezu vertikal ausgerichtet ist, mit einem in alternativ horizontaler oder vertikaler Richtung verfahrbaren Sägeaggregat, welches eine Eintauchbewegung in das Werkstück senkrecht zu den genannten Richtungen ausführen kann, wobei die genannten Bewegungen sinnrichtig mittels einer Verriegelungsvorrichtung gegeneinander verriegelt sind, und mit einem in mehrere Schaltstellungen bewegbaren Betätigungsorgan, mit dem ein Sperrorgan, eine Verriegelungsvorrichtung oder eine Rastvorrichtung der Plattensäge betätigbar ist, dadurch gekennzeichnet, dass das Betätigungsorgan eine am oberen und unteren Ende des Sägebalkens verschwenkbar gelagerte Schaltstange (6) ist.

2. Plattensäge nach Anspruch 1, dadurch gekennzeichnet, dass am Sägebalken (4) ein über lose Rollen (25, 26) laufendes endloses Messband (24) angeordnet und mittels eines Mitnehmerorganes (28) mit dem Sägeaggregat (5) gekoppelt ist, wobei jede Vertikalverstellung des Sägeaggregates (5) auch eine entsprechende Verstellung des Messbandes (24) bewirkt.

3. Plattensäge nach einem der Ansprüche 1 oder 2, dadurch gekennzeichnet, dass die Schaltstange (6) an einem ihrer Schwenkarme (7, 35) eine drehbare Abtast- oder Betätigungsrolle (7b, 34) aufweist zum Antasten oder Betätigen einer schwenkbar gelagerten, insbesondere bügel- oder hakenförmigen Uebertragungsstange (8, 33), welche eine zugehörige Steuerkurve (A, B) aufweist und definiert.

4. Plattensäge nach einem der Ansprüche 1 bis 3, dadurch gekennzeichnet, dass im oberen und unteren Randbereich des Gestells (1) je eine Arretierungsleiste (16, 17) zur Fixierung des Sägebalkens (4) in einer bestimmten Vertikalschnittposition vorgesehen ist und jede dieser Arretierungsleisten (16, 17) eine Anzahl in gegenseitigen waagrechten Abständen angeordneter Arretierungskerben (18) aufweist, wobei die Schwenkstange (6) an ihrem oberen Ende über einen Kabelzug (11) mit zwei Rollen (15a, 15b) verbunden ist, die in der dem Vertikalschnitt entsprechenden Schwenkstangenlage in die genannten Kerben (18) einrasten und das Sägeaggregat (5) damit gegen jegliche Horizontalverschiebung blockieren.

5. Plattensäge nach einem der Ansprüche 1 bis 4, dadurch gekennzeichnet, dass am Sägeaggregat (5) ein Hebelsystem (19, 20) angeordnet ist, das eine Einraststellung (19a) für die Schwenkstange (6) in deren Horizontalschnittlage aufweist, derart, dass die Schwenkstange (6) in dieser Lage das Eintauchen des in Vertikalschnittstellung befindlichen Sägeaggregates (5) versperrt.

6. Plattensäge nach Anspruch 5, dadurch gekennzeichnet, dass das genannte Hebelsystem (19, 20) einen am Sägeaggregat (5) schwenkbar gelagerten ersten Hebel (19) umfasst, welcher eine Vertiefung (19a) zur Aufnahme der in Horizontalschnittlage eingerasteten Schwenkstange (6) besitzt und ausserdem mit einem zweiten Hebel (20) zusammenwirkt, welcher das Sägeaggregat (5) am Sägebalken (4) verklemmt und damit jegliche Vertikalverschiebung des Sägeaggregates (5) während des Horizontalschnitts blockiert.

7. Plattensäge nach einem der vorhergehenden Ansprüche, dadurch gekennzeichnet, dass die Schwenkstange (6) mit dem Kabelzug (11) über eine hakenförmige Uebertragungsstange (8, 33) verbunden ist, an deren Innenfläche ein mit der Schwenkstange (6) über einen am Sägebalken (4) drehbar gelagerten Hebel (7, 35) verbundenes Abtast- oder Führungsorgan (7b, 34), beispielsweise ein Kugellager, geführt ist.

8. Plattensäge nach einem der Ansprüche 1 bis 7, dadurch gekennzeichnet, dass die Schwenkstange (6) einen U-förmigen Querschnitt aufweist und von der offenen Seite derselben her ein Steuerkopf (37) ins Innere der Schwenkstange (6) hineinragt, der bei Verlagerung der Schwenkstange in ihre Horizontalschnitt-Position ein Klemmorgan (39) gegen den Sägebalken (4) drückt und das Sägeaggregat (5) somit gegen Vertikalverschiebung am Sägebalken sichert.

9. Plattensäge nach Anspruch 8, dadurch gekennzeichnet, dass das Sägeaggregat mit einem Klemmorgan (39) in Form einer Schraube am Sägebalken (4) arretierbar ist, wobei die Schraube mittels eines Kurbelarmes (38) betätigbar ist und gegen eine am Sägebalken (4) ortsfest angeordnete Klemmplatte (41) gepresst wird.

10. Plattensäge nach einem der Ansprüche 8 bis 9, dadurch gekennzeichnet, dass am Rahmen (5a) des Sägeaggregates (5) ein Schlitten (44) um ein bestimmtes Mass (b) entgegen der Rückstellkraft einer Zugfeder (45) verschiebbar gelagert ist und am Sägeaggregat ferner eine Wippe (49) angeordnet ist, welche in ihrer einen Endlage mit einem Arm (49a) ins Innere der Schwenkstange (6) eingreift und diese damit gegen Verschwenkung sichert, solange die Wippe (49) durch eine am eingetauchten Sägeaggregat (5) angeordneten Ansatz (50) in ihrer Lage gehalten wird.

## Claims

1. Plate saw having an abutment surface for a substantially upright plate-shaped workpiece (P), with a saw beam which is movable in the horizontal direction and the longitudinal axis of which is substantially vertically aligned, with a sawing assembly which is movable alternatively in the horizontal or vertical direction and is capable of carrying out a plunging movement into the workpiece perpendicularly to the abovementioned directions, the said movements being blocked in the correct directions relative to one another by means of a locking device, and with an actuating member which is movable into a plurality of switching positions, by means of which a blocking means, a locking device or an engaging device of the plate saw can be actuated, characterised in that the actuating member is a shifter rod (6) pivotably mounted at the top and bottom ends of the saw beam.

2. Plate saw according to claim 1, characterised in that on the saw beam (4) is mounted an endless measuring belt (24) running over loose rollers (25, 26), which is coupled to the sawing assembly (5) by means of a cam member (28), each vertical movement of the sawing assembly (5) also causing a corresponding movement of the measuring belt (24).

3. Plate saw according to one of claims 1 or 2, characterised in that the shifter rod (6) has, on one of its pivot arms (7, 35), a rotatable sensing or actuating roller (7b, 34) for sensing or actuating a pivotably mounted, especially bracket- or hook-shaped transmission rod (8, 33) which possesses and defines an associated control cam (A, B).

4. Plate saw according to one of claims 1 to 3, characterised in that, in the upper and lower edge areas of the frame (1), there is in each case a locking strip (16, 17) for fixing the saw beam (4) in a specific vertical cutting position and each of these locking strips (16, 17) has a number of locking notches (18) arranged at mutual horizontal spacings, the pivot rod (6) being connected at its upper end, via a length of cable (11), to two rollers (15a, 15b) which engage in said notches (18), in the position of the pivot rod corresponding to the vertical cut, and thereby secure the sawing assembly (5) against any horizontal displacement.

5. Plate saw according to one of claims 1 to 4, characterised in that, mounted on the sawing assembly (5), there is a lever system (19, 20) which has an engaging position (19a) for the pivot rod (6) in its horizontal cutting position, such that in this position the pivot rod (6) prevents the plunging movement of the sawing assembly (5) which is in the vertical cutting position.

6. Plate saw according to claim 5, characterised in that the said lever system (19, 20) has a first lever (19) pivotably mounted on the sawing assembly (5), said first lever having a recess (19a) for receiving the pivot rod (6) engaged in the horizontal cutting position and also engaging with a second lever (20) which clamps the sawing assembly (5) to the saw beam (4), thereby preventing any vertical displacement of the sawing assembly (5) during horizontal cutting.

7. Plate saw according to one of the preceding claims, characterised in that the pivot rod (6) is connected to the length of cable (11) via a hook-shaped transmission rod (8, 33), along whose inner surface is guided a sensing or guide member (7b, 34), such as a ball bearing, connected to the pivot rod (6) via a lever (7, 35) rotatably mounted on the saw beam (4).

8. Plate saw according to one of claims 1 to 7, characterised in that the pivot rod (6) is U-shaped in cross section and, from the open side thereof, a control head (37) projects into the interior of the pivot rod (6), said control head pressing a clamping member (39) against the saw beam (4) when the pivot rod is moved into its horizontal cutting position, thereby securing the sawing assembly (5) against vertical movement on the saw beam.

9. Plate saw according to claim 8, characterised in that the sawing assembly can be locked in place using a clamping member (39) in the form of a screw on the saw beam (4), the screw being actuable by means of a crank arm (38) and pressed against a clamping plate (41) fixedly mounted on the saw beam (4).

10. Plate saw according to one of claims 8 and 9, characterised in that a carriage (44) is mounted on the frame (5a) of the sawing assembly (5) so as to be movable by a certain amount (b) counter to the recoil force of a tension spring (45), and furthermore a rocker (49) is mounted on the sawing assembly, so as to engage, in one of its end positions, with one arm (49a) inside the pivot rod (6), thereby securing the latter against pivoting, as long as the rocker (49) is held in its position by an attachment (50) mounted on the sawing assembly (5) which is in the plunging position.

## Revendications

1. Scie à panneaux, comportant une surface d'appui pour une pièce à couper (P) en forme de panneau, positionnée pratiquement verticalement, comportant une poutre de scie pouvant être déplacée dans le sens horizontal et dont l'axe longitudinal est orienté à peu près verticalement, comportant un bloc de scie pouvant être déplacé alternativement dans le sens horizontal ou dans le sens vertical, et pouvant effectuer un mouvement de plongée dans la pièce à couper, perpendiculairement aux directions mentionnées, les mouvements mentionnés étant bloqués l'un par rapport à l'autre dans les sens respectifs au moyen d'un dispositif de verrouillage, et comportant un organe de commande pouvant être amené dans plusieurs positions de commande et par l'intermédiaire duquel un organe de blocage, un dispositif de verrouillage ou un dispositif d'arrêt de la scie à panneaux, peut être actionné, caractérisée en ce que l'organe de commande est constitué par une barre de commande (6) articulée de façon pivotante sur les extrémités supérieure et inférieure de la poutre de scie.

2. Scie à panneaux selon la revendication 1, caractérisée en ce qu'un mètre à ruban sans fin (24), guidé autour de poulies folles (25, 26), est disposé sur la poutre de scie (4), et est relié au bloc de scie (5) par l'intermédiaire d'un organe d'entraînement (28), tout déplacement vertical du bloc de scie (5) provoquant aussi un déplacement correspondant du mètre à ruban (24).

3. Scie à panneaux selon l'une des revendications 1 ou 2, caractérisée en ce que la barre de commande (6) comporte, sur l'un de ses bras oscillants (7, 35), un galet rotatif suiveur ou de commande (7b, 34) destiné à suivre ou actionner une tige de transmission (8, 33) logée de façon pivotante, notamment une tige en forme d'étrier ou de crochet, qui présente et définit une came de commande associée (A, B).

4. Scie à panneaux selon l'une des revendications 1 à 3, caractérisée en ce que, dans les parties marginales supérieure et inférieure du bâti (1), respectivement une barrette d'arrêt (16, 17) est prévue, destinée à arrêter la poutre de scie (4) dans une position de coupe verticale déterminée, et en ce que chacune de ces barrettes d'arrêt (16, 17) comporte un certain nombre d'encoches d'arrêt (18) espacées horizontalement les unes des autres, la barre pivotante (6) étant reliée, à son extrémité supérieure, par l'intermédiaire d'un câble de commande (11), à deux galets (15a, 15b) qui s'enclenchent dans lesdites encoches (18) lorsque la barre pivotante se trouve dans la position correspondant à une coupe verticale, et bloquent ainsi tout déplacement horizontal du bloc de scie (5).

5. Scie à panneaux selon l'une des revendications 1 à 4, caractérisée en ce qu'un système de leviers (19, 20) disposé sur le bloc de scie (5) présente une position d'arrêt (19a) de la barre pivotante (6) dans la position de coupe horizontale de celle-ci, de manière que la barre pivotante (6) interdise, dans cette position, la plongée du bloc de scie (5) lorsqu'il se trouve en position de coupe verticale.

6. Scie à panneaux selon la revendication 5, caractérisée en ce que ledit système de leviers (19, 20) comporte un premier levier (19) articulé de façon oscillante sur le bloc de scie (5), qui comporte un évidement (19a) destiné à recevoir la barre pivotante (6) lorsque celle-ci est enclenchée en position de coupe horizontale, et qui coopère en outre avec un deuxième levier (20) qui bloque le bloc de scie (5) sur la poutre de scie (4) et interdit ainsi tout déplacement vertical du bloc de scie (5) pendant une opération de coupe horizontale.

7. Scie à panneaux selon l'une quelconque des revendications précédentes, caractérisée en ce que la barre pivotante (6) est reliée au câble de commande (11) par l'intermédiaire d'une tige de transmission (8, 33) en forme de crochet, la face intérieure de laquelle guidant un organe suiveur ou de guidage (7b, 34), par exemple un roulement à billes, qui est relié à la barre pivotante (6) par l'intermédiaire d'un levier (7, 35) articulé de façon oscillante sur la poutre de scie (4).

8. Scie à panneaux selon l'une des revendications 1 à 7, caractérisée en ce que la barre pivotante (6) présente une section transversale en U, et en ce qu'une tête de commande (37) fait saillie à l'intérieur de la barre pivotante (6) depuis le côté ouvert du U, cette tête serrant un organe de serrage (39) contre la poutre de scie (4) lorsque la barre pivotante est déplacée jusque dans sa position de coupe horizontale, bloquant ainsi tout déplacement vertical du bloc de scie (5) sur la poutre de scie.

9. Scie à panneaux selon la revendication 8, caractérisée en ce que le bloc de scie peut être arrêté sur la poutre de scie (4) au moyen d'un organe de serrage (39) se présentant sous forme d'une vis, la vis pouvant être actionnée par l'intermédiaire d'un bras de manivelle (38) et étant serrée contre une plaque de serrage stationnaire (41) solidaire de la poutre de scie (4).

10. Scie à panneaux selon l'une des revendications 8 à 9, caractérisée en ce qu'un chariot (44) est monté de façon coulissante sur le châssis (5a) du bloc de scie (5) de manière à pouvoir être déplacé sur une certaine distance (b) à l'encontre de la force de rappel d'un ressort de traction (45), et en ce que, par ailleurs, un culbuteur (49) est disposé sur le bloc de scie et, lorsqu'il se trouve dans l'une de ses positions de fin de course, pénètre par un bras (49a) à l'intérieur de la barre pivotante (6) et verrouille ainsi cette dernière contre tout pivotement, tant que le culbuteur (49) est maintenu dans cette position par une patte (50) ménagée sur le bloc de scie (5) se trouvant en position plongée.
